# FASCICULE DE BREVET EUROPEEN

(11) **EP 2 454 390 B1**
(45) Date de publication et mention de la délivrance du brevet: **12.08.2015**
(21) Numéro de dépôt: 10731754.7
(22) Date de dépôt: 15.07.2010
(51) Int. Cl.: C22B 59/00, C22B 60/02, G21C 19/44

(54) **PROCEDE D'EXTRACTION D'AU MOINS UN ELEMENT CHIMIQUE D'UN MILIEU SEL FONDU**
VERFAHREN ZUR EXTRAKTION VON MINDESTENS EINEM CHEMISCHEN ELEMET AUS EINEM SCHMELZSALZMEDIUM
METHOD FOR EXTRACTING AT LEAST ONE CHEMICAL ELEMENT FROM A MOLTEN SALT MEDIUM

(30) Priorité: 17.07.2009 FR 0954989
(43) Date de publication de la demande: 23.05.2012
(73) Titulaire: Commissariat à l'Énergie Atomique et aux Énergies Alternatives, 75015 Paris (FR)
(72) Inventeur: GOETTMANN, Frédéric, F-30400 Villeneuve Les Avignon (FR); CONOCAR, Olivier, F-30131 Pujaut (FR); GRANDJEAN, Agnès, F-30330 Saint Marcel De Careiret (FR); MEYER, Daniel, F-30150 Saint Genies De Comolas (FR); LACQUEMENT, Jérôme, F-30200 Saint Laurent De Carnols (FR)
(74) Mandataire: Ilgart, Jean-Christophe
(86) Numéro de dépôt international: PCT/EP2010/060245
(87) Numéro de publication internationale: WO 2011/006974

(56) Documents cités:
- JP-A- 61 178 004
- US-A- 4 149 942
- US-A- 5 663 250
- Z. KOLARIK AND E.V. RENARD: "Recovery of Value Fission Platinoids from Spent Nuclear Fuel" PLATINUM METALS REV., vol. 47, no. 2, 2003, pages 74-87, XP002566612

## Description

### DOMAINE TECHNIQUE

La présente invention a trait à un procédé d'extraction d'au moins un élément chimique en milieu sel fondu, selon les revendications 1-15.

Ce procédé est susceptible d'être utilisé aussi bien pour séparer deux groupes distincts d'éléments chimiques que pour séparer deux éléments chimiques appartenant à un même groupe.

Aussi, il peut trouver tout particulièrement son application dans le domaine du retraitement des combustibles nucléaires irradiés, en particulier pour extraire certains actinides et/ou produits de fission d'un milieu sel fondu comprenant de tels éléments.

### ÉTAT DE LA TECHNIQUE ANTÉRIEURE

A ce jour, tous les schémas de retraitement des combustibles irradiés exploités commercialement sont fondés sur le procédé hydrométallurgique PUREX (acronyme correspondant à « Plutonium Uranium Refining by Extraction »). Dans ce procédé, le combustible irradié est tout d'abord dissous dans de l'acide nitrique. La solution résultante est ensuite mise en contact avec un solvant organique faisant office d'extractant non miscible avec l'acide nitrique moyennant quoi l'on récupère à l'issue de ce procédé deux phases :
- une phase organique comprenant l'uranium et le plutonium ; et
- une phase aqueuse comprenant les actinides mineurs (tels que l'américium et le curium) et les produits de fission, laquelle est appelée également « raffinat PUREX ».

La phase organique comprenant l'uranium et le plutonium subit une étape d'extraction, de sorte à isoler l'uranium du plutonium, lesquels pourront être réutilisés pour réaliser des combustibles à base d'uranium et/ou de plutonium.

Le procédé PUREX mis au point durant la deuxième guerre mondiale est maintenant mis en oeuvre dans des usines commerciales de grande capacité, présentant typiquement un débit de retraitement de l'ordre de 1000 t/an. Il a bénéficié notamment de nombreux perfectionnements, qui en ont fait un procédé fiable, robuste et produisant peu de déchets secondaires.

Le procédé PUREX présente toutefois de nombreux inconvénients :
- il est souvent considéré comme potentiellement proliférant, car il permet d'obtenir après l'extraction de la phase organique un flux de plutonium pur ;
- le solvant organique utilisé comme extractant est sensible à l'irradiation, ce qui impose pour les combustibles à forts taux de combustion, des temps de refroidissement longs avant retraitement ;
- enfin, pour être soumis à un retraitement, le combustible doit être dissous préalablement dans de l'acide nitrique, ce qui pose un problème dans le cas des combustibles réfractaires non solubles dans l'acide nitrique.

De façon alternative, des procédés pyrochimiques de retraitement des combustibles nucléaires irradiés mettant en oeuvre des techniques séparatives à haute-température en milieu sel fondu (principalement, des milieux chlorures fondus ou fluorures fondus). Ils ont été intensivement étudiés dans les années 70, soit pour le retraitement des combustibles usés issus des réacteurs classiques, soit pour le retraitement en ligne du combustible d'un réacteur à sel fondu. En effet, les sels fondus (généralement sous forme de chlorures ou de fluorures alcalins) peuvent dissoudre assez facilement les combustibles, les cibles dédiées et matrices réfractaires envisagées pour les réacteurs du futur. Ils mettent en oeuvre des réactifs insensibles à l'irradiation et transparents aux neutrons ce qui permet de retraiter des combustibles à fort taux de combustion peu refroidis, sans contraintes de criticité. Enfin, ils ne permettent pas d'obtenir directement un flux de plutonium pur.

D'autres procédés pyrochimiques de traitement des combustibles existent parmi lesquelles on peut citer :
- l'électrolyse ou l'électroraffinage des actinides ;
- la précipitation sélective des oxydes d'actinides par ajout d'ions oxydes O²⁻ dans le sel fondu ;
- l'extraction par un métal liquide réducteur (appelée également extraction sélective).

Dans la perspective, entre autres, de pouvoir limiter les flux aqueux lors de l'extraction d'un élément chimique, les auteurs se sont proposé de mettre au point un nouveau procédé d'extraction d'au moins un élément chimique en milieu sel fondu, dont le produit d'extraction puisse être facilement séparé du milieu sel fondu et être éventuellement transformé pour en faire un composé inerte, tel qu'une céramique (comme une céramique oxyde, une céramique nitrure ou une céramique carbure).

### EXPOSÉ DE L'INVENTION

Ainsi, l'invention a trait à un procédé d'extraction d'au moins un élément chimique contenu dans un milieu sel fondu comprenant les étapes suivantes :
a) une étape de mise en contact dudit milieu sel fondu comprenant ledit élément chimique avec un monomère comprenant au moins un groupe apte à complexer ledit élément chimique, le monomère formant ainsi un complexe de coordination avec ledit élément chimique ;
b) une étape de polymérisation dudit monomère ainsi complexé.

Le procédé mis en place dans le cadre de cette invention présente les avantages suivants :
- il permet une extraction simple par un phénomène de complexation sans générer de flux aqueux d'extraction ;
- il permet une séparation simple du produit de complexation résultant après une réaction appropriée (en l'occurrence une réaction de polymérisation) par simple séparation physique.

Avant d'entrer plus en détail dans la description, nous précisons les définitions suivantes.

Par sel fondu, on entend un liquide anhydre résultant de la fusion d'au moins un sel, par exemple un sel alcalin.

Par complexation, on entend une réaction entre le monomère et l'élément chimique, impliquant le partage d'un doublet libre porté par un groupe du monomère avec l'élément chimique.

Par complexe de coordination, on entend un édifice polyatomique comprenant l'élément chimique autour duquel des groupes appartenant à au moins un monomère sont liés par des liaisons de coordination, la liaison de coordination étant créée par apport d'un doublet d'électrons appartenant auxdits groupes dans une orbitale vide de l'élément chimique.

Comme mentionné ci-dessus, le procédé de l'invention comprend une étape de mise en contact dudit milieu sel fondu comprenant ledit élément chimique avec un monomère comprenant au moins un groupe apte à complexer ledit élément chimique.

Le monomère peut comprendre au moins un groupe porteur d'un doublet libre, en particulier un groupe amine, lequel va pouvoir complexer l'élément chimique à extraire.

A titre d'exemples de tels monomères, on peut citer des monomères aliphatiques comprenant au moins un groupe amine et un groupe nitrile, tels que :
- le cyanamide de formule suivante : 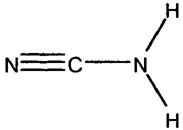
- le dicyanamide de formule suivante :

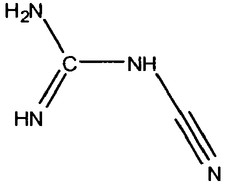

On peut citer également des monomères aromatiques comprenant au moins un groupe amine et/ou un groupe nitrile, tels que :
- la mélamine de formule suivante : 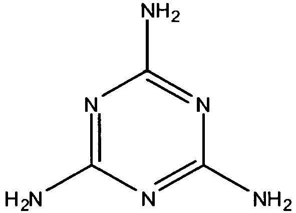
- le 1,4-dicyanobenzène de formule suivante : 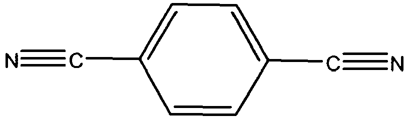
- le 1,2,4,5-tétracyanobenzène de formule suivante :

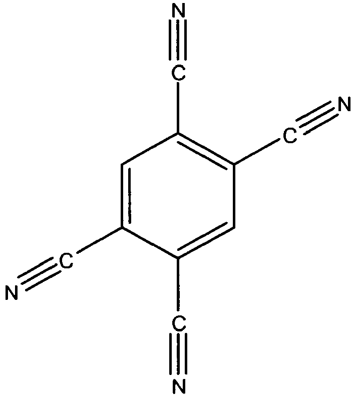

Le milieu sel fondu comprenant l'élément chimique à extraire peut être à base d'au moins un sel alcalin, tel que du chlorure de sodium, du chlorure de lithium, du chlorure de potassium et un mélange de ceux-ci.

Le milieu sel fondu comprenant l'élément chimique peut être également un mélange eutectique de sels tel qu'un mélange LiCl-KCl, l'avantage d'un tel mélange étant de présenter une température de fusion moindre par rapport aux sels LiCl, KCl pris individuellement.

Le procédé comprend, ensuite, une étape de polymérisation du monomère ainsi complexé, cette étape de polymérisation pouvant être induite par un chauffage du milieu comprenant le sel fondu et le monomère complexé.

Le polymère résultant piège ainsi l'élément chimique complexé initialement par les monomères.

Le polymère issu de l'étape de polymérisation peut être ensuite soumis à une étape de séparation du milieu sel fondu et éventuellement converti en un carbure, un nitrure ou un oxyde.

L'étape de séparation peut être réalisée par filtration ou centrifugation.

A titre d'exemple, le procédé de l'invention peut être un procédé d'extraction du néodyme contenu dans un milieu sel fondu comprenant :
- une étape de mise en contact d'un milieu sel fondu comprenant du néodyme avec de la mélamine ;
- une étape de polymérisation de la mélamine complexée avec le néodyme,
le milieu sel fondu pouvant être un mélange eutectique comprenant du chlorure de lithium et du chlorure de potassium, le néodyme se présentant sous forme de chlorure de néodyme.

Comme mentionné ci-dessus, l'élément chimique peut être tout élément de la classification périodique de Mendeleïev. En particulier, il peut s'agir d'un élément métallique, tel qu'un métal de transition, d'un élément lanthanide tel que le néodyme, d'un élément actinide ou des mélanges de ceux-ci.

En utilisant des monomères présentant des groupes aptes à complexer sélectivement au moins un élément chimique par rapport à un autre élément chimique, le procédé de complexation de l'invention pourrait être ainsi utilisé à des fins de séparation d'au moins un élément chimique par rapport à au moins un autre élément chimique.

Ainsi, l'invention a trait également à un procédé de séparation d'au moins un premier élément chimique E1 d'au moins un second élément chimique E2 comprenant une étape de mise en oeuvre du procédé d'extraction susmentionné, le ou les monomères choisis étant des monomères comprenant au moins un groupe apte à complexer sélectivement ledit élément E1 par rapport à ledit élément E2.

A titre d'exemple, le procédé de séparation peut consister en la séparation du néodyme d'un mélange comprenant celui-ci et du cérium, ce procédé comprenant :
- une étape de mise en contact d'un milieu sel fondu comprenant du néodyme et du cérium avec de la mélamine, la mélamine étant apte à complexer sélectivement le néodyme par rapport au cérium ;
- une étape de polymérisation de la mélamine complexée avec le néodyme,
   le milieu sel fondu pouvant être un mélange eutectique comprenant du chlorure de lithium et du chlorure de potassium, le néodyme se présentant sous forme de chlorure de néodyme et le cérium sous forme de chlorure de cérium ;
- une étape de séparation du polymère ainsi complexé du milieu sel fondu.

Il est à noter que le néodyme (III) n'est pas un actinide mais un lanthanide qui présente des propriétés chimiques extrêmement proches de celles des actinides (III) (comme le plutonium (III), l'américium (III) et le curium (III)) notamment en termes de solubilité et de complexation. Il est donc classique d'utiliser le néodyme (III) à la place des actinides trivalents dans l'élaboration de procédés destinés à être mis en oeuvre avec ces actinides.

Du fait que le néodyme (III) est susceptible d'être séparé sélectivement par le procédé de l'invention, on peut en déduire que le procédé de l'invention pourrait s'appliquer à la séparation des actinides, tels que les actinides mineurs par rapport aux lanthanides.

Ainsi, selon un mode de réalisation, le ou les éléments E1 sont choisis dans le groupe constitué par des éléments actinides (tels que les actinides mineurs comme l'américium, le curium et le neptunium), tandis que le ou les éléments E2 sont choisis dans le groupe des lanthanides, des produits de fission non lanthanides.

En particulier, le procédé d'extraction et le procédé de séparation de l'invention peuvent trouver une application dans le domaine du retraitement d'un combustible irradié notamment pour assurer la séparation des actinides et des produits de fission.

Dans ce cas, le procédé d'extraction ou le procédé de séparation peut comprendre, avant l'étape de mise en contact, une étape de fusion du combustible irradié dans le milieu sel fondu.

Le procédé d'extraction et le procédé de séparation peuvent comprendre, en outre, un procédé de traitement thermique du polymère obtenu à une température efficace pour le transformer en une céramique, qui peut être un carbure, un carbonitrure, un nitrure, (si le monomère comprend au moins un atome d'azote), ce traitement pouvant consister en un chauffage à une atmosphère inerte tel qu'une atmosphère d'azote et/ou d'argon ou qui peut être un oxyde comprenant l'élément extrait ou séparé sous réserve de pratiquer un chauffage sous air.

Lorsque les éléments chimiques retenus dans ces produits sont des actinides, tels que des actinides mineurs, ils pourraient être utilisés en tant que cibles de transmutation.

Outre les avantages déjà susmentionnés, les procédés de l'invention comprennent les avantages suivants :
- l'utilisation de réactifs, en l'occurrence, des monomères, souvent peu chers ;
- une mise en oeuvre plus simple que des techniques d'extraction telles que l'électroraffinage, l'extraction réductrice ou la précipitation par apport d'ions oxydes.

L'invention va maintenant être décrite par rapport aux exemples suivants donnés à titre illustratif et non limitatif.

### BRÈVE DESCRIPTION DES DESSINS

La figure 1 est un diagramme d'analyse thermogravimétrique ATG obtenu pour la poudre réalisée selon l'exemple 1.
La figure 2 est un diagramme EDS obtenu pour la poudre réalisée selon l'exemple 1.
La figure 3 est un diagramme EDS obtenu pour la poudre réalisée selon l'exemple 3.
La figure 4 est un diagramme DRX obtenu pour la poudre réalisée selon l'exemple 3.
La figure 5 est un diagramme EDS obtenu pour la poudre réalisée selon l'exemple 5.

### EXPOSÉ DÉTAILLÉ DE MODES DE RÉALISATION PARTICULIERS

### EXEMPLE 1

Les réactifs utilisés dans le cadre de cet exemple sont les suivants :
LiCl (8,7 g ; 0,2 mol)
KCl (11,2 g ; 0,15 mol)
NdCl₃ (2,0 g; 8 mmol)
Mélamine 1,4 g (11 mmol)

Les sels (à savoir KCl, LiCl, NdCl₃) sont mélangés intimement dans un mortier puis séchés 2 heures sous vide à 120°C. L'ensemble est alors placé dans un creuset en quartz dans un four tubulaire permettant de travailler sous atmosphère contrôlée. Après une nuit sous flux d'argon à température ambiante, le creuset est porté à 400°C pendant 1 heure, moyennant quoi l'on obtient un mélange de sel fondu se présentant sous la forme d'une solution bleue. On ajoute alors à 400°C la mélamine puis l'on homogénéise la solution. L'ensemble est alors porté à 450°C pour une heure, puis à 550°C pendant 4 heures, moyennant quoi l'on obtient la polymérisation de la mélamine.

Après refroidissement, on obtient un bloc présentant une phase blanche en surface et une phase jaune au fond du creuset. L'ensemble est broyé puis lavé à l'acide nitrique 1M et à l'eau puis filtré. Cette poudre est nommée ci-après Nd@C₃N₄. L'analyse par spectrométrie d'émission atomique ICP-AES des eaux de lavage montre qu'environ 50% du néodyme de départ a été incorporé dans la poudre. La poudre obtenue a été caractérisée par différentes techniques : l'analyse thermogravimétrique et la spectrométrie aux rayons X par dispersion en énergie (dite EDS).

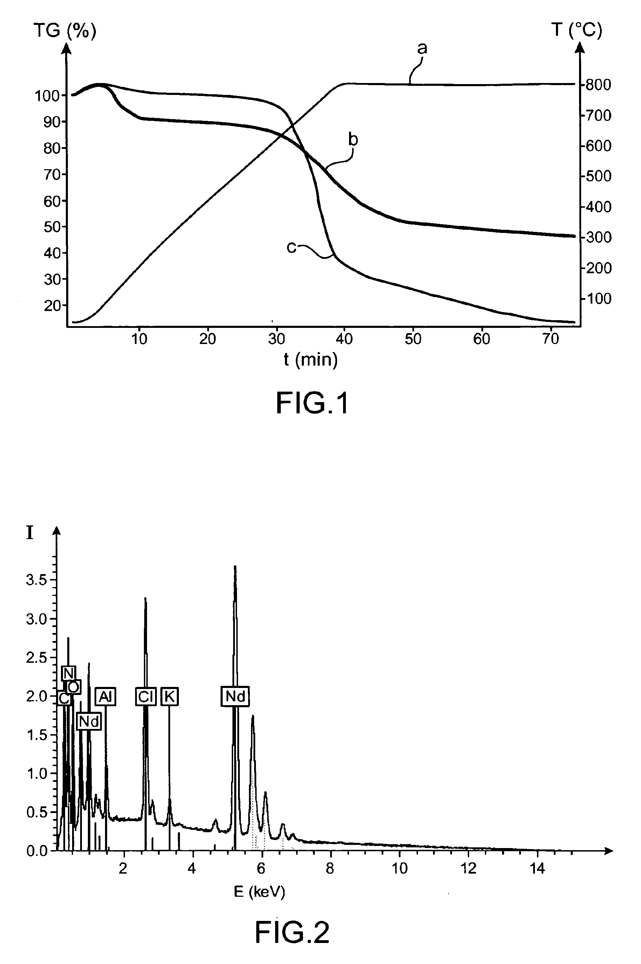

Les résultats de l'analyse thermogravimétrique figurent sur le diagramme représenté figure 1 représentant en première ordonnée l'évolution de la masse de la poudre TG (en %), en seconde ordonnée la température T (en °C) et en abscisse la durée t (en min).

La courbe (a) illustre le traitement thermique qui a été appliqué à la poudre Nd@C₃N₄ préparée selon le mode opératoire exposé ci-dessus et à une poudre C₃N₄ préparée selon un mode opératoire similaire à celui exposé ci-dessus, si ce n'est qu'il n'est pas procédé à l'ajout d'un sel de néodyme. Le traitement thermique se compose d'une montée en température jusqu'à 800°C pendant 40 minutes suivi d'un maintien de cette température à 800°C pendant 30 minutes.

La courbe (b) illustre l'évolution de la perte de masse TG (en %) de la poudre Nd@C₃N₄ pendant le traitement thermique susmentionné. L'on constate qu'après 30 minutes à 800°C, il subsiste une masse résiduelle significative par rapport à la poudre synthétisée sans néodyme C₃N₄, qui s'est décomposée totalement dans les mêmes conditions (comme l'atteste la courbe (c) illustrant la perte de masse TG (en %)de la poudre C₃N₄ pendant le traitement thermique susmentionné).

Les résultats de la spectrométrie aux rayons X par dispersion en énergie (dite EDS)sont reportés sur la figure 2 (l'abscisse représentant l'énergie E (en keV)) effectué avec la poudre Nd@C₃N₄ permet d'identifier la présence de néodyme.

L'analyse élémentaire a été effectuée avec le poudre Nd@C₃N₄ et avec la poudre de référence C₃N₄. Il ressort clairement du tableau ci-dessous que les poudres obtenues comprennent environ 20% en masse de néodyme.

| Eléments | C₃N₄ | C₃N₄ | Nd@C₃N₄ | Nd@C₃N₄ |
|---|---|---|---|---|
| | % massique | Ratio molaire | % massique | Ratio molaire |
| C | 27,6 | 6,0 | 19,0 | 6,0 |
| H | 1,1 | 2,9 | 1,8 | 6,8 |
| N | 46,5 | 8,7 | 31,9 | 8,6 |
| Nd | - | - | 20,1 | 0,5 |
| Cl | 8,9 | 0,7 | 5,9 | 0,6 |
| Li | 4,3 | 1,6 | 0,5 | 0, 6 |
| K | 2,2 | 0,1 | 0,4 | 0,0 |
| C/N | - | 0,69 | - | 0,69 |

### EXEMPLE 2

Les réactifs utilisés dans le cadre de cet exemple sont les suivants :
LiCl (8,7 g ; 0,2 mol)
KCl (11,2 g ; 0,15 mol)
NdCl₃ (2,0 g; 8 mmol)
Mélamine 1,4 g (11 mmol)

Les sels (à savoir KCl, LiCl, NdCl₃) sont mélangés intimement dans un mortier puis séchés 24 heures dans une étuve à 120°C. L'ensemble est alors porté à 400°C pendant 1 heure dans un creuset en alumine placé dans un four à moufle (c'est-à-dire sans contrôle de l'atmosphère), moyennant quoi l'on obtient un mélange de sel fondu se présentant sous la forme d'une solution bleue. On ajoute alors à 400°C la mélamine puis l'on homogénéise la solution. L'ensemble est alors porté à 450°C pour une heure, puis à 550°C pendant 4 heures.

Après refroidissement, on obtient un bloc comprenant une phase blanche en surface et une phase jaune au fond du creuset. L'ensemble est broyé puis lavé à l'acide nitrique 1M et à l'eau puis filtré. La poudre obtenue présente les mêmes caractéristiques que celles obtenues dans l'exemple 1.

### EXEMPLE 3

Cet exemple a trait à la conversion de la poudre Nd@C₃N₄ préparée selon l'exemple 1 en oxyde de néodyme Nd₂O₃.

Pour ce faire, 1 g de Nd@C₃N₄ est chauffé sous air à 800°C pendant 4 heures. La poudre résultante est légèrement violette.

Les analyses par spectrométrie aux rayons X par dispersion en énergie (dite EDS) et diffraction aux rayons X (dite DRX) confirment qu'il s'agit bien d'oxyde de néodyme Nd₂O₃.

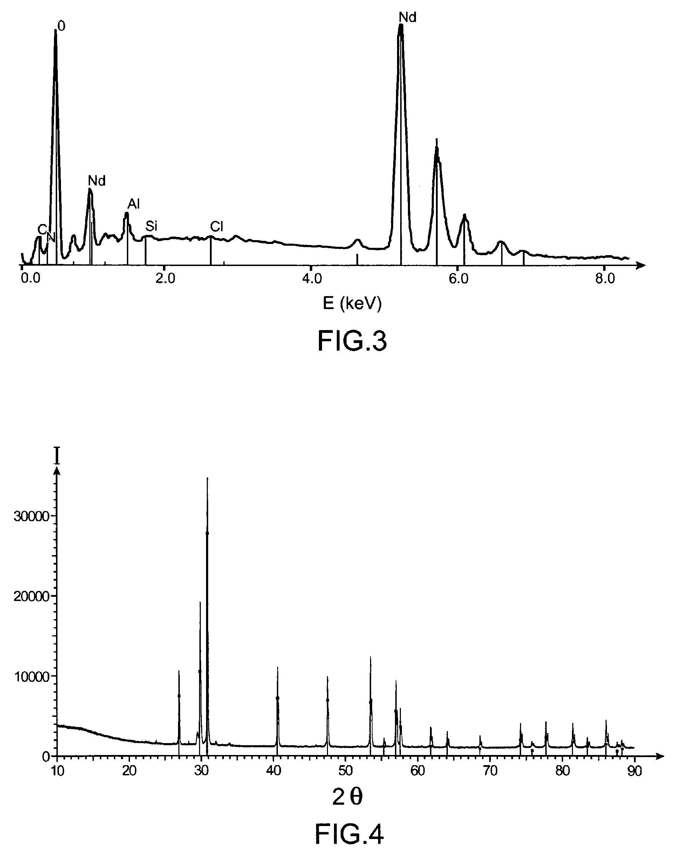

En effet, le spectre EDS représenté sur la figure 3 (l'abscisse représentant l'énergie E (en keV)) montre, de façon significative, que des bandes de fluorescence correspondant au néodyme et à l'oxygène.

Quand au diffractogramme des rayons X représenté sur la figure 4 (l'ordonnée représentant l'intensité des pics I et l'abscisse l'angle 2θ), il correspond au diffractogramme de référence de Nd₂O₃.

### EXEMPLE 4

Cet exemple a trait à la conversion de la poudre Nd@C₃N₄ préparée selon l'exemple 1 en carbure de néodyme Nd₂C₃.

Pour ce faire, 1 g de Nd@C₃N₄ est chauffé sous air à 800°C pour 4 heures.

La poudre obtenue présente un diffractogramme des rayons X typique de Nd₂C₃.

### EXEMPLE 5

Cet exemple a pour visée de démontrer l'extraction sélective du néodyme d'un mélange de chlorures métalliques.

Les réactifs utilisés dans le cadre de cet exemple sont les suivants :
LiCl (8,7 g ; 0,2 mol)
KCl (11,2 g ; 0,15 mol)
NdCl₃ (2,0 g; 8 mmol)
CeCl₃ (2,6 g ; 10 mmol)
Mélamine 1,4 g (11 mmol)

Les sels (à savoir KCl, LiCl, NdCl₃ et CeCl₃) sont mélangés intimement dans un mortier puis séchés 24 heures dans une étuve à 120°C. L'ensemble est alors porté à 450°C pendant 1 heure dans un creuset en alumine, moyennant quoi l'on obtient un mélange de sel fondu se présentant sous la forme d'une solution bleue. On ajoute alors à 450°C la mélamine puis l'on homogénéise la solution. L'ensemble est alors porté à 450°C pour une heure, puis à 550°C pendant 4 heures.

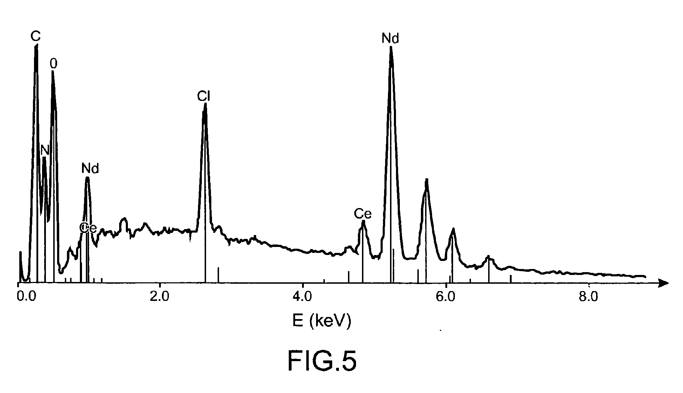

Après refroidissement, on obtient un bloc présentant une phase blanche en surface et une phase jaune au fond du creuset. L'ensemble est broyé puis lavé à l'acide nitrique 1M et à l'eau puis filtré. La poudre obtenue présente les mêmes caractéristiques que celles obtenues à l'exemple 1, ce qui atteste de l'extraction sélective du néodyme par rapport au cérium. En particulier, le diagramme EDS (l'abscisse représentant l'énergie E(en keV)) représenté sur la figure 5 montre que le néodyme est en large excès par rapport au cérium.

## Revendications

1. Procédé d'extraction d'au moins un élément chimique contenu dans un milieu sel fondu, lequel élément chimique est un élément métallique, un élément lanthanide et/ou un élément actinide, comprenant les étapes suivantes :
a) une étape de mise en contact dudit milieu sel fondu comprenant ledit élément chimique avec un monomère comprenant au moins un groupe apte à complexer ledit élément chimique, le monomère formant ainsi un complexe de coordination avec ledit élément chimique ;
b) une étape de polymérisation dudit monomère ainsi complexé.

2. Procédé selon la revendication 1, dans lequel le monomère comprend au moins un groupe porteur d'un doublet libre.

3. Procédé selon la revendication 1 ou 2, dans lequel le monomère est un monomère aliphatique comprenant au moins un groupe amine et un groupe nitrile.

4. Procédé selon la revendication 3, dans lequel le monomère est choisi parmi :
- le cyanamide de formule suivante : 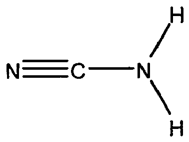
- le dicyanamide de formule suivante :

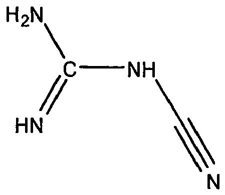

5. Procédé selon la revendication 1 ou 2, dans lequel le monomère est un monomère aromatique comprenant au moins un groupe amine et/ou un groupe nitrile.

6. Procédé selon la revendication 5, dans lequel le monomère aromatique est choisi parmi :
- la mélamine de formule suivante : 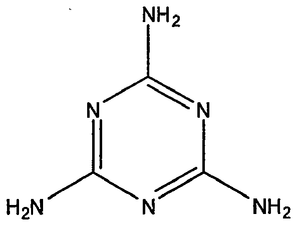
- le 1,4-dicyanobenzène de formule suivante : 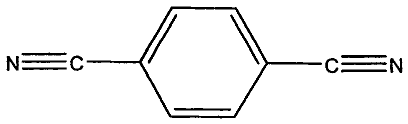
- le 1,2,4,5-tétracyanobenzène de formule suivante :

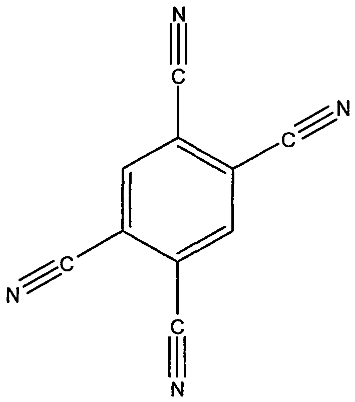

7. Procédé selon l'une quelconque des revendications précédentes, dans lequel le monomère est la mélamine.

8. Procédé selon l'une quelconque des revendications précédentes, dans lequel le milieu sel fondu est à base d'au moins un sel alcalin.

9. Procédé selon l'une quelconque des revendications précédentes, dans lequel le milieu sel fondu est un sel alcalin choisi parmi le chlorure de sodium, le chlorure de lithium, le chlorure de potassium et les mélanges de ceux-ci.

10. Procédé selon l'une quelconque des revendications précédentes, dans lequel le milieu sel fondu est un mélange eutectique, tel qu'un mélange LiCl-KCl.

11. Procédé selon l'une quelconque des revendications précédentes, comprenant :
- une étape de mise en contact d'un milieu sel fondu comprenant du néodyme avec de la mélamine ;
- une étape de polymérisation de la mélamine complexée avec le néodyme,
le milieu pouvant être un mélange eutectique comprenant du chlorure de lithium et du chlorure de potassium, le néodyme se présentant sous forme de chlorure de néodyme.

12. Procédé selon l'une quelconque des revendications précédentes, comprenant en outre, après l'étape b), une étape de séparation du milieu sel fondu du polymère résultant de l'étape b).

13. Procédé selon l'une quelconque des revendications précédentes, comprenant, en outre, une étape de traitement thermique du polymère obtenu à l'issue de l'étape b) à une température efficace pour le transformer en une céramique.

14. Procédé de séparation d'au moins un premier élément chimique E1 d'au moins un second élément chimique E2 comprenant une étape de mise en oeuvre du procédé d'extraction tel que défini selon l'une quelconque des revendications 1 à 13, le ou les monomères choisis étant des monomères comprenant au moins un groupe apte à complexer sélectivement ledit élément E1 par rapport à ledit élément E2.

15. Procédé selon la revendication 14, consistant en la séparation du néodyme d'un mélange comprenant celui-ci et du cérium, ce procédé comprenant :
- une étape de mise en contact d'un milieu sel fondu comprenant du néodyme et du cérium avec de la mélamine, la mélamine étant apte à complexer sélectivement le néodyme par rapport au cérium ;
- une étape de polymérisation de la mélamine complexée avec le néodyme,
le milieu sel fondu pouvant être un mélange eutectique comprenant du chlorure de lithium et du chlorure de potassium, le néodyme se présentant sous forme de chlorure de néodyme et le cérium sous forme de chlorure de cérium ;
- une étape de séparation du polymère ainsi complexé du milieu sel fondu.

## Patentansprüche

1. Verfahren zur Extraktion wenigstens eines chemischen Elements, das in einer Schmelzsalzumgebung enthalten ist, wobei das chemische Element ein Metallelement, ein Lanthanidelement und/oder ein Actinidelement ist, umfassend die folgenden Schritte:
a) einen Schritt des Inkontaktbringens der Schmelzsalzumgebung, die das chemische Element enthält, mit einem Monomer, das wenigstens eine Gruppe enthält, die geeignet ist, das chemische Element zu komplexieren, wobei das Monomer somit einen Koordinationskomplex mit dem chemischen Element bildet;
b) einen Schritt der Polymerisation des derart komplexierten Monomers.

2. Verfahren nach Anspruch 1, bei dem das Monomer wenigstens eine Gruppe enthält, die Träger eines freien Doubletts ist.

3. Verfahren nach Anspruch 1 oder 2, bei dem das Monomer ein aliphatisches Monomer ist, das wenigstens eine Amingruppe und eine Nitrilgruppe enthält.

4. Verfahren nach Anspruch 3, bei dem das Monomer ausgewählt ist aus:
- dem Cyanamid mit der nachfolgenden Formel: 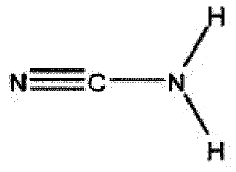
- dem Dicyanamid mit der nachfolgenden Formel:

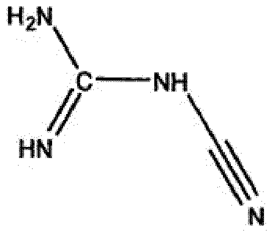

5. Verfahren nach Anspruch 1 oder 2, bei dem das Monomer ein aromatisches Monomer ist, das wenigstens eine Amingruppe und/oder eine Nitrilgruppe enthält.

6. Verfahren nach Anspruch 5, bei dem das aromatische Monomer ausgewählt ist aus:
- dem Melamin mit der nachfolgenden Formel: 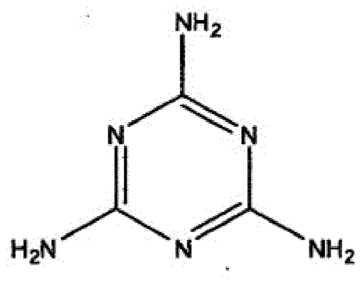
- dem 1,4-Dicyanobenzol mit der nachfolgenden Formel: 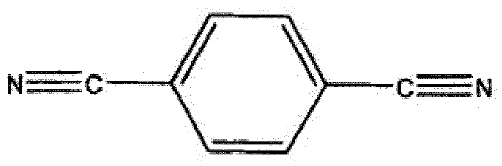
- dem 1,2,4,5-Tetracyanobenzol mit der nachfolgenden Formel:

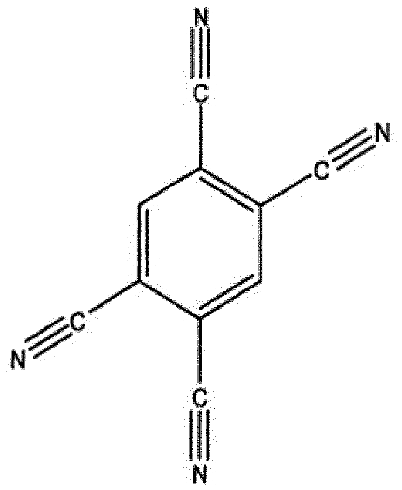

7. Verfahren nach einem der vorhergehenden Ansprüche, bei dem das Monomer Melamin ist.

8. Verfahren nach einem der vorhergehenden Ansprüche, bei dem die Schmelzsalzumgebung auf Basis wenigstens eines Alkalisalzes ist.

9. Verfahren nach einem der vorhergehenden Ansprüche, bei dem die Schmelzsalzumgebung ein Alkalisalz ist, ausgewählt aus Natriumchlorid, Lithiumchlorid, Kaliumchlorid und deren Mischungen.

10. Verfahren nach einem der vorhergehenden Ansprüche, bei dem die Schmelzsalzumgebung eine eutektische Mischung ist, beispielsweise eine LiCl-KCl-Mischung.

11. Verfahren nach einem der vorhergehenden Ansprüche, umfassend:
- einen Schritt des Inkontaktbringens einer Schmelzsalzumgebung, die Neodym enthält, mit Melamin;
- einen Schritt der Polymerisation des mit dem Neodym komplexierten Melamins,
- wobei die Umgebung eine eutektische Mischung sein kann, die Lithiumchlorid und Kaliumchlorid enthält, wobei das Neodym in Form von Neodymchlorid vorliegt.

12. Verfahren nach einem der vorhergehenden Ansprüche, ferner umfassend, nach dem Schritt b), einen Schritt der Separation der Schmelzsalzumgebung von dem Polymer, das aus dem Schritt b) resultiert.

13. Verfahren nach einem der vorhergehenden Ansprüche, ferner umfassend einen Schritt der thermischen Behandlung des am Ende des Schritts b) erhaltenen Polymers bei einer Temperatur, die wirksam ist, um es in eine Keramik umzuwandeln.

14. Verfahren zur Separation wenigstens eines ersten chemischen Elements E1 von wenigstens einem zweiten chemischen Element E2, umfassend einen Schritt der Durchführung des Extraktionsverfahrens wie in einem der Ansprüche 1 bis 13 definiert, wobei das oder die ausgewählte Monomer(e) ein Monomer/Monomere ist/sind, das/die wenigstens eine Gruppe enthält/enthalten, die geeignet ist, das Element E1 selektiv bezüglich des Elements E2 zu komplexieren.

15. Verfahren nach Anspruch 14, das in der Separation des Neodyms von einer dieses sowie Cerium enthaltenden Mischung besteht, wobei dieses Verfahren umfasst:
- einen Schritt des Inkontaktbringens einer Schmelzsalzumgebung, die Neodym und Cerium enthält, mit dem Melamin, wobei das Melamin geeignet ist, selektiv das Neodym bezüglich des Ceriums zu komplexieren;
- einen Schritt der Polymerisation des mit dem Neodym komplexierten Melamins,
- wobei die Schmelzsalzumgebung eine eutektische Mischung sein kann, die Lithiumchlorid und Kaliumchlorid enthält, wobei das Neodym in Form von Neodymchlorid und das Cerium in Form von Ceriumchlorid vorliegt;
- einen Schritt der Separation des derart komplexierten Polymers von der Schmelzsalzumgebung.

## Claims

1. A method for extracting at least one chemical element contained in a molten salt medium, said chemical element being a metal element, a lanthanide element and/or and an actinide element, comprising the following steps:
a) a step for putting said molten salt medium comprising said chemical element in contact with a monomer comprising at least one group able to complex said chemical element, the monomer thereby forming a coordination complex with said chemical element;
b) a step for polymerizing said thereby complexed monomer.

2. The method according to claim 1, wherein the monomer comprises at least one group bearing a free doublet.

3. The method according to claim 1 or 2, wherein the monomer is an aliphatic monomer comprising at least one amine group and one nitrile group.

4. The method according to claim 3, wherein the monomer is selected from:
- the cyanamide of the following formula: 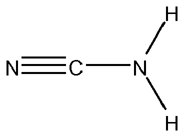
- the dicyanamide of the following formula:

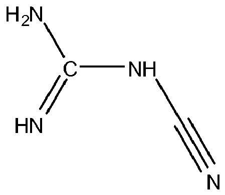

5. The method according to claim 1 or 2 wherein the monomer is an aromatic monomer comprising at least one amine group and/or one nitrile group.

6. The method according to claim 5, wherein the aromatic monomer is selected from:
- the melamine of the following formula: 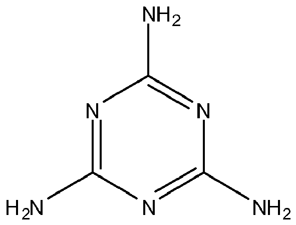
- the 1,4-dicyanobenzene of the following formula: 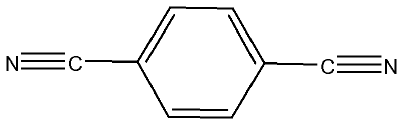
- the 1,2,4,5-tetracyanobenzene of the following formula:

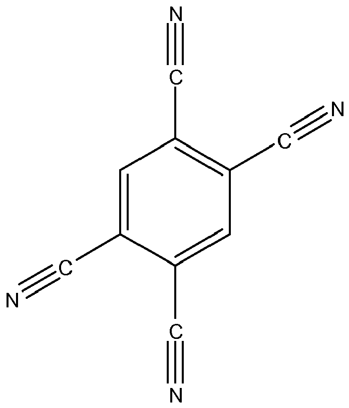

7. The method according to any of the preceding claims, wherein the monomer is melamine.

8. The method according to any of the preceding claims, wherein the molten salt medium is based on at least one alkaline salt.

9. The method according to any of the preceding claims, wherein the molten salt medium is an alkaline salt selected from sodium chloride, lithium chloride, potassium chloride and mixtures thereof.

10. The method according to any of the preceding claims, wherein the molten salt medium is an eutectic mixture such as a LiCl-KCl mixture.

11. The method according to any of the preceding claims, comprising:
- a step for putting a molten salt medium comprising neodymium in contact with melamine;
- a step for polymerizing the melamine complexed with the neodymium,
the medium may be an eutectic mixture comprising lithium chloride and potassium chloride, the neodymium appearing as neodymium chloride.

12. The method according to any of the preceding claims, further comprising, after step b), a step for separating the molten salt medium from the polymer resulting from step b).

13. The method according to any of the preceding claims, further comprising a step for heat treatment of the polymer obtained at the end of step b) at an effective temperature for transforming it into a ceramic.

14. A method for separating at least one first chemical element E1 from at least one second element E2 comprising a step for applying an extraction method as defined according to any of claims 1 to 13, the selective monomer(s) being monomers comprising at least one group able to selectively complex said element E1 with respect to said element E2.

15. The method according to claim 14, consisting in the separation of neodymium from a mixture comprising the latter and cerium, this method comprising:
- a step for putting a molten salt medium comprising neodymium and cerium in contact with melamine, the melamine being able to selectively complex the neodymium with respect to cerium;
- a step for polymerizing the melamine complexed with neodymium,
the molten salt medium may be an eutectic mixture comprising lithium chloride and potassium chloride, the neodymium appearing as neodymium chloride and the cerium as cerium chloride;
- a step for separating the thereby complexed polymer from the molten salt medium.
